# EUROPEAN PATENT APPLICATION

(11) **EP 0 814 429 A2**
(43) Date of publication of application: **29.12.1997**
(21) Application number: 97304268.2
(22) Date of filing: 18.06.1997
(51) Int. Cl.: G06T 3/40

(54) **An image processing system**

(30) Priority: 19.06.1996 GB 9612772
(71) Applicant: QUANTEL LIMITED, Newbury, Berkshire RG14 2LT (GB)
(72) Inventor: Jones, Simon, Hungerford, Berkshire RG17 8XZ (GB)
(74) Representative: Whitten, George Alan

(57) **Abstract**

An image processing system 30 comprises a source image store 31, a destination image store 39, a calculation circuit 33, and a look-up table 45. Initial image data from the source store 31 is input to the calculation circuit 33 together with interpolation parameter data from the look-up table 45. The calculation circuit 33 interpolates the image data from the source store to produce data representing a magnified version of the image, which magnified image data is stored in the destination store 3a. The generation of unwanted artifacts in the image is avoided by using an interpolation function selected to provide a continuous transition between adjacent pixel values in the processed image data.

## Description

The invention relates to an image processing system.

Image processing systems in which the painting or drawing of a colour image can be simulated, or a portion of one image can be merged into another by electronic means are well known. One such graphic system is described in our British patent number 2,089,625 and corresponding US patent number 4,514,818, the teachings of which are incorporated herein by reference. This system includes a user operable input device which may be used by the user to select from a range of colours and a range of intensities and to choose from a set of notional drawing implements for use in the painting or drawing.

When a colour is chosen by the user, values representing the components of the selected colour are stored in a colour register. An implement is chosen by selecting from among different implement representations displayed on a display screen and the selected implement is defined by parameters conforming to a 3-dimensional surface representing the profile of the implement. Generally speaking the implement profile will have a high centre falling away to a lower value toward the periphery of the profile although other profiles may, of course, be defined. The implement profile represents the notional distribution of colour which would be applied by the implement to the image over the area of the image which it covers.

The user operable input device is preferably a touch tablet and stylus combination. The touch tablet is arranged to generate position signals designating the position of the stylus relative to the touch tablet when the stylus is brought into proximity. When the stylus is applied to the touch tablet a pressure signal representing the pressure applied via the stylus to the touch tablet is output from the stylus and stored in a pressure signal register. For some implements, representing say paint brushes, position signals are allowed to be generated for each movement of the stylus by the distance between picture points or similar distance, whilst for other implements, say air brushes, position signals are generated at regular time intervals, even if the stylus is held stationary on the touch tablet.

When a position signal is produced, new video signals (pixels) are derived for every picture point in the patch covered by the selected implement. An image store is provided and each new pixel is written at the appropriate picture point in the store. Such new pixels are derived bv a processing circuit in accordance with the selected colour data and the distribution of the selected implement, and in response also to the pressure applied to the stylus and to the value of the pixel previously stored at the respective picture point in the store.

The user, who it is envisaged would normally be an artist lacking experience in the use of computer based systems, paints or draws by choosing a desire colour and implement and then manipulating the stylus, causing the touch tablet to generate a series of position signals which define the path or positioning of the stylus. The processing circuit reads pixels from the image store for a patch of picture points in response to each position signal and these pixels are blended by the processor with signals representing the chosen colour in proportions depending upon the respective values of the brush profile and pressure. The blend is then written back to the picture store replacing the pixels previously stored therein.

In general, the blending process is carried out a number of times for each picture point in the image store whether the implement is moving or stationary (assuming in the case of the moving implement that the patch covered by the implement is larger than the spacing between picture points). The final proportion will depend on the number of processing operations performed per pixel.

To enable the user to observe his creation, the stored picture is read repeatedly and the pixels are applied to a TV-type colour monitor, so that the build-up of the picture can be observed. Of course such systems are not limited to TV-type formats and any suitable video format may be adopted. The system described avoids the problem of jagged edges in the image, an unpleasant stepping appearance normally associated with lines not lying horizontally or vertically in a raster display.

Such systems are used in the processing of images from a wide variety of different sources, including standard television images, high definition television (HDTV) images, movie film quality images and print quality images. Thus, the resolution of the images varies widely from the 525 lines resolution of an NTSC television image, through the approximately 2000 x 3000 pixels definition of a movie image to the 10,000 x 8,000 or more pixels of a print quality image. Although the processing performed is essentially the same as that described in our above-mentioned patents regardless of the size or resolution of the image it is nevertheless necessary to approach the processing of a high resolution image differently than a low resolution image.

For example when such a system is required to effect painting on a high resolution graphic image, e.g. 10,000 x 8,000 pixels, the largest normally available brush size which is limited to 200 pixels diameter appears very small in relation to the overall image and the painting of large areas of the image is therefore a slow process. One way of dealing with this problem would be to provide a brush store with much larger brush stamp sizes but that solution would involve having a brush store of greatly increased capacity which would prove expensive.

This problem may be dealt with by way of the technique described in our British Patent Application published as GB-A-2,235,856 and corresponding US Patent Publication US-A-5,142,616, the teachings of which are incorporated herein by reference. As is described in these publications, the modification of a high resolution image is controlled using a low resolution stencil. During manipulation of the image a low resolution representation is displayed on a monitor and manipulated under the control of a user defined low resolution stencil. Once the desired effect has been achieved, the low resolution stencil is up converted to high resolution and used to control the corresponding modification of the high resolution image.

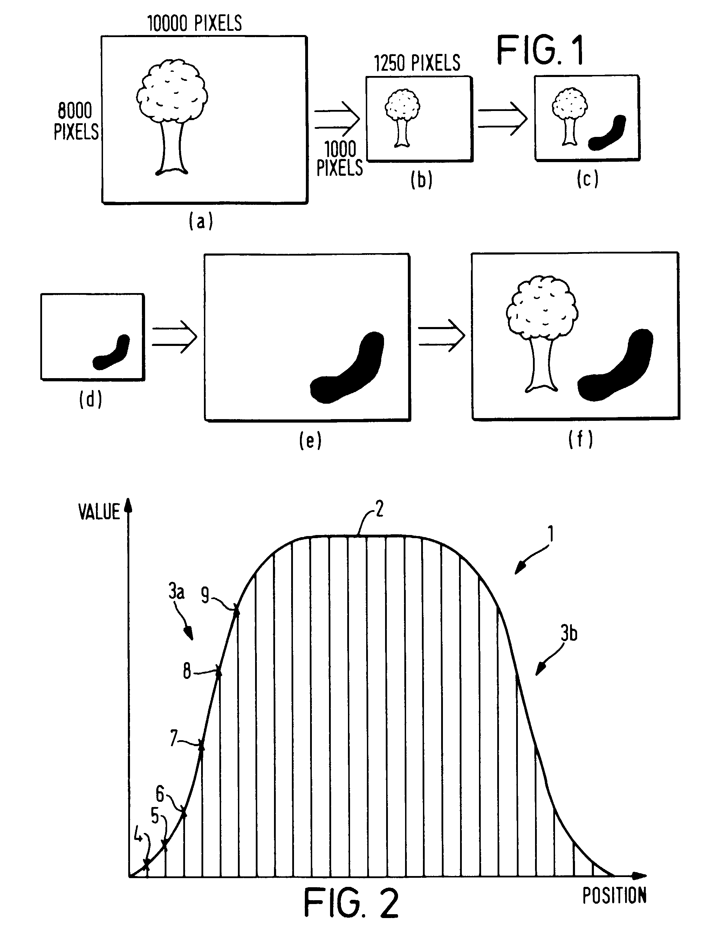

Thus, the problem is usually dealt with by way of a mode of operation as shown in Figure 1 of the accompanying drawings. In this mode of operation, during "painting" the date representing the resolution version of the image (a) is processing to produce data representing reduced resolution version of the image (b) which is displayed on a monitor (c). Suitably the image (a) is reduced by a factor of eight in both the horizontal and vertical directions to provide the image (b) of approximately 1250 x 1000 pixels so that the image can be displayed on an HDTV monitor which is of comparable resolution. The user "paints" over this image using the brush sizes which are normally available (i.e. up to 200 pixels in diameter) but the system actually "paints" data representing a stencil (d) into a stencil store. This stencil data defines a stencil having substantially the same resolution as the displayed image. The brush stamps which make up the brush stroke in the stencil (d) thus appear much larger in relation to the displayed image (c) than they do in relation to the high resolution image (a). When "painting" is complete, the data defining the reduced resolution displayed image (b), which was only need for display purposes, is discarded leaving the data defining painted stencil. The stencil data is magnified up to the size of the high resolution image thereby producing data defining a high resolution stencil (e). The high resolution stencil is then keyed over the high resolution image (a) by processing the data representing the two images (a) and (e) to produce a high resolution image (f) comprising the subject of the original image (a) modified by the brush stroke defined by the stencil (c).

Figure 2 of the accompanying drawings is a graph representing a section through a single patch of picture points "drawn" into a store in the manner described hereinabove. The single patch has a profile 1 corresponding to that defined by the implement data and thus the profile has a flat central region 2 in which pixels have a maximum value and side regions 3a, 3b where the pixel values fall away to zero. The patch is representative of the stencil data that is created when the user "paints" into the image.

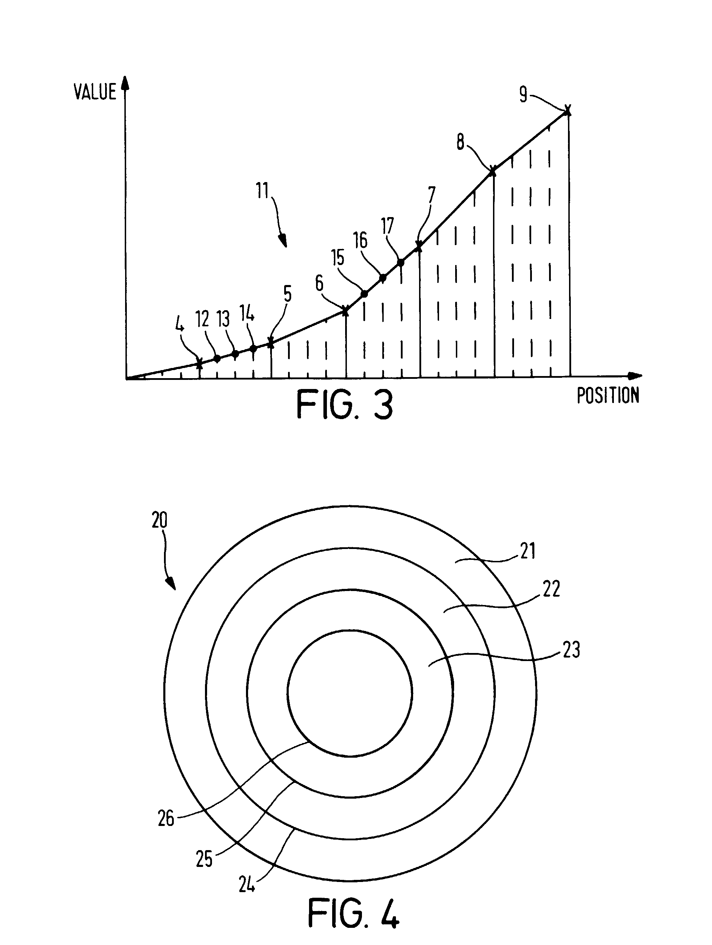

When the stencil is enlarged the data is processed by a sizing/effects circuit within the system similar to that described in our co-pending British Patent Application published as GB-A-2,305,052 and corresponding US Application No. 08/708,779, the teachings of which are incorporated herein by reference. The sizing circuit is arranged to enlarge or magnify the stencil by interpolating the pixel values 4 to 9 to determine values at positions between the pixels. Figure 3 of the accompanying drawings shows a portion 11 of the profile at the pixel points 4 to 9 inclusive enlarged bv a factor of 4. Thus. between adjacent initial pixel values three further intermediate pixel values 12, 13, 14 and 15, 16, 17 for example are generated by the sizing circuit by interpolation.

Figures 2 and 3 represent pixel values along a single line, i.e. one-dimensional, in the stencil, but of course the stencil is in fact two-dimensional. The usual interpolation method employed to create the intermediate pixel values 12 to 17 is bi-linear four-point interpolation in which intermediate pixel values in a two-dimensional image are derived from four adjacent pixels. As can be seen in Figure 3 this method produces intermediate pixel values along a straight line between adjacent initial pixel values in the stencil. The resulting plot is therefore a piecewise linear approximation of the high resolution version of the initial lower resolution stencil. In many situations this is an acceptable approximation to the true high resolution version of the stencil. A problem does, however, remain because the high resolution profile 11 is not smooth and continuous. The plot is linear between initial pixel points but changes abruptly at the initial pixel points. Consequently, the rate of change of the profile at one side of an initial pixel point is different than that at the other side of the initial pixel point.

The human eye is able to perceive abrupt changes in the rate of change of intensity (or colour) which is the parameter represented by the pixel values of the graphs in Figures 2 and 3. Thus, as shown in Figure 4 of the accompanying drawings, the abrupt changes result in a patch 20 being seen as a series of bands 21, 22, 23 of varying intensity with the boundary between one band and the next occurring at positions 24, 25, 26 corresponding to the positions of the initial sampling points 2 to 7. These boundaries are known as second order artifacts because they are artifacts which occur as a result of an abrupt change in the rate of change of an image parameter, such as the changes in the piecewise linear approximation of the sampling points 4 to 9. In contrast, a first order artifact is one which occurs as a result of an abrupt change of a parameter, say a sudden change from one intensity value to another. Second order artifacts are clearly undesirable because they can be seen in images produced by the system. Second order artifacts are unacceptable especially in still images such as photographs but also in moving images such as in television or movie film.

The invention aims to provide an image processing system which is able to effect magnification of an image represented by digital data without producing second order artifacts.

According to one aspect of the invention there is provided an image processing method for processing data defining a multiplicity of pixels that together form an initial image to produce processed data defining a multiplicity of pixels that together form a magnified version of the image, in which method the data is processed to produce data representing one or more pixels between pixels in the initial image by way of a non-linear interpolating function selected to minimise second order artifacts in the magnified version of the image.

In another aspect of the invention there is provided an image processing apparatus for magnifying an image formed by an array of pixels each comprising digital data by providing, by interpolation between adjacent pixels of said image, pixels of a magnified form thereof, comprising a memory in the form of a look-up table stored with filter coefficients representative of spline weighting functions and a calculation circuit adapted to employ said coefficients to calculate interpolated pixel values in the magnified image such that at least second order artifacts in the magnified image are diminished.

The invention also provides an image processing system for processing data representing an image to produce data representing a larger version of the image, in which system initial image data defining a multiplicity of pixel values predetermined positions in an initial image is processed to produce data representing additional pixel values at positions between the predetermined positions, which processing is effected by way of an interpolation function selected to provide a continuous transition between adjacent pixel values in the processed image data.

The above and further features of the invention are set forth with particularity in the appended claims and together with advantages thereof will become clearer from consideration of the following detailed description of an exemplary embodiment of the invention given with reference to the accompanying drawings.

In the drawings:
Figure 1 illustrates a known procedure for applying a brush stroke to an image, as already described Therein;
Figure 2 illustrates a section through a single patch of pixels in an image, as already described herein;
Figure 3 illustrates a magnified version of a portion of the patch in Figure 2, as already described herein;
Figure 4 illustrates artifacts in the magnified portion of the patch;
Figure 5 is a schematic functional block diagram of an image processing system embodying the invention; and
Figure 6 shows in more detail a calculation circuit of the Figure 5 system.

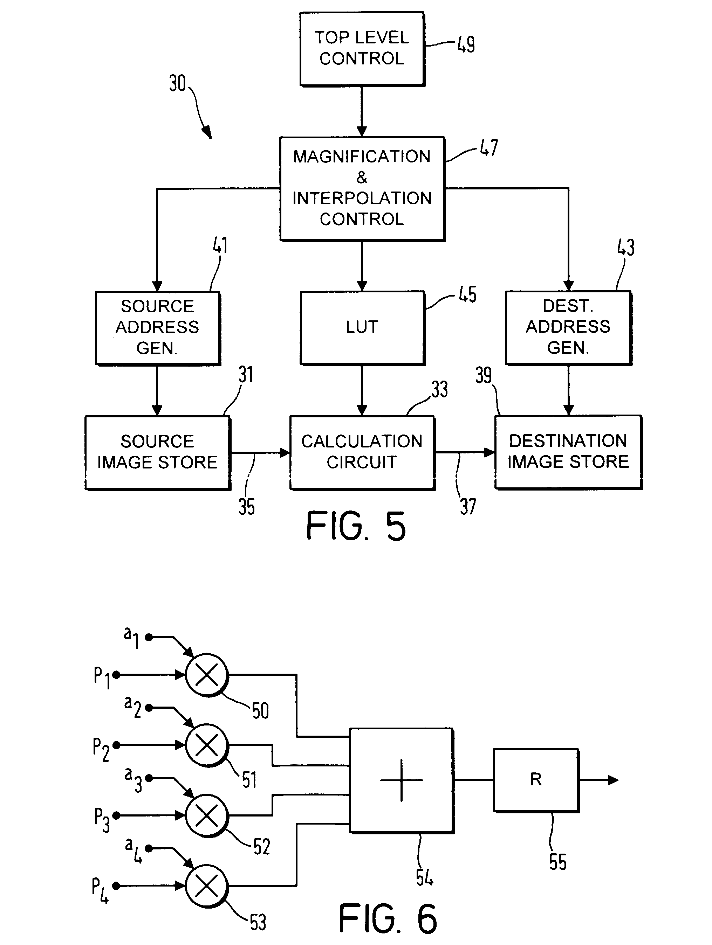

Turning now to Figure 5 of the accompanying drawings there is shown an image processing system 30 which is essentially the same as the system described in the abovementioned GB-A-2,305,052. As shown in Figure 5, the system 30 comprises a source image store 31 for storing image data from any suitable external source including a video camera, a video tape recorder, a video disc store or an image scanner for example. The data in the source image store 30 defines a multiplicity of pixels that together form an image (for example a stencil) to be magnified by the system 30. The source image store 31 is connected to a calculation circuit 33 which received pixel data from the store 31 by way of a data bus 35. The calculation circuit is arranged to perform a magnifying effect on the data it receives from the store 31 by the creation of interpolated pixel data. The magnified data is output on data bus 37 from the calculation circuit 33 to a destination image store 39. A source address generator 41 determines the pixels and the order thereof to be supplied from the source store 31 to the calculation circuit 33, and a destination address generator 43 determines the address in the destination store to which the magnified image pixel data from the calculation mechanism is to be directed.

In addition to the source pixel data received from the source store 31, the calculating circuit 33 also receives weighting coefficients pertaining to one of a number of spline functions which, preferably, are B-spline functions which are applied to the source pixels supplied to the calculating circuit to provide, as hereinafter described in further detail, the output pixels supplied to the destination store 39. Although B-spline functions are those, of choice, preferably employed in the system it is pointed out that any non-linear interpolation function which has the effect of diminishing the visibility in the destination image of second order artifacts may be employed. That is, any function that does not result in the creation of abrupt changes in the rate of change of an image parameter such as intensity or colour, but instead produces a smooth local transition at the initial pixel point, may be used. Such functions are *per se* well known and need not be described in detail herein. The use of splines in image data interpolation is discussed in detail in "Computer Graphics - Principles and Practice" by Voley, van Dam, *et al.* 2nd ed. published 1990 by Addison-Wesley, for example.

The spline weighting function coefficients are stored in a memory comprising a look-up table (LUT) 45 and the coefficients of the spline employed by the calculator circuit 33 are selected by a magnification and interpolation controller 37 which also instructs the source and destination address generators 41 and 43 respectively to generate the pixel addresses which are required for the magnification calculation and the pixels addresses at which the pixels of the magnified image are to be stored.

In its turn the magnification and interpolation controller 47 is under the control of a top level controller 49 which instructs the controller 47 as the type, e.g. B-spline, and the degree of magnification operation to be effected.

Figure 6 of the accompanying drawings shows the calculation circuit 33 in greater detail. As shown in Figure 6, the calculation circuit 33 comprises four multipliers 50, 51, 52, 53 and an adder 54 for adding together the outputs from the multipliers. The four multipliers 50, 51, 52, 53 receive respective pixel data P₁ to P₄ on the bus 35 from the image store 31 and receive respective coefficient data a₁ and a₄ from the coefficient look up table 45.

The pixel data P₁ to P₄ and the coefficients a₁ to a₄ are operated on by the multipliers 50 to 53 and the adder 54 to produce an intermediate result R = a₁P₁ + a₂P₂ + a₃P₃ + a₄P₄. This intermediate result R is stored in the register 55 and from there is output to the bus 33 for storage in the destination image store 39.

This calculation is repeated for each of the intermediate pixels between the initial pixel values 2 to 7 (see Figures 1 and 2). Depending on the scale of the magnification the initial pixel values 2 to 7 may be output to the destination store unaltered or they may simply be replaced by pixel values at intermediate positions adjacent the initial positions. A more detailed description of the calculation circuit is given in the abovementioned GB-A-2,305,052 although it should be noted that as described therein the calculation circuit is configured to operate as a filter rather than as an interpolator.

Brightness, Y, and colour difference U and V values of the destination image pixels are separately calculated in the manner described to provide the total data for each destination image pixel. The destination image can be sent to be displayed on a display monitor, stored in a disc store or on a tape or printed by a printer.

Although a look-up table 45 has been referred to for storage of the spline coefficients, the coefficients could be calculated "on the fly" by the magnification and interpolation controller and supplied directly to the calculation circuit. the use of B-spline weighting functions is preferred as they effect local smoothing of the brush profile curve by calculation of each interpolated pixel using a few, suitably about three, successive pixel values.

Having thus described the present invention by reference to a preferred embodiment it is to be well understood that the embodiment in question is exemplary only and that modifications and variations such as will occur to those possessed of appropriate knowledge and skills may be made without departure from the spirit and scope of the invention as set forth in the appended claims and equivalents thereof.

## Claims

1. An image processing method for processing data defining a multiplicity of pixels that together form an initial image to produce processed data defining a multiplicity of pixels that together form a magnified version of the image, in which method the data is processed to produce data representing one or more pixels between pixels in the initial image by way of a non-linear interpolating function selected to minimise second order artifacts in the magnified version of the image.

2. An image processing method as claimed in claim 1, wherein said non-linear interpolation functions is a spline function.

3. An image processing method as claimed in claim 2, wherein said spline function is a local control spline function.

4. An image processing method as claimed in claim 3, wherein said local control spline function is a B-spline function.

5. An image processing apparatus for magnifying an image formed by an array of pixels each comprising digital data by providing, by interpolation between adjacent pixels of said image, pixels of a magnified form thereof, comprising a memory in the form of a look-up table stored with filter coefficients representative of spline weighting functions and a calculation circuit adapted to employ said coefficients to calculate interpolated pixel values in the magnified image such that at least second order artifacts in the magnified image are diminished.

6. An image processing apparatus as claimed in claim 5, further comprising a magnification and interpolation controller for selecting the spline weighting function coefficients to be employed by said calculation means.

7. An image processing apparatus as claimed in claim 6, further comprising a source store for storing data defining said image, a destination store for storing data defining said magnified image, a source address generator, and a destination address generator, and wherein said magnification and interpolation controller is adapted to instruct the address generators, in the case of the source address generator to locate image pixels required for calculation of a corresponding magnified image pixel and in the case of the destination image address generator to calculate the address of said corresponding magnified image pixel.

8. An image processing apparatus as claimed in claim 6 or 7, further comprising a look-up table for storing said spline weighting function coefficients.

9. An image processing apparatus as claimed in claim 8, wherein said look-up table is adapted to store a plurality of spline weighting functions and said magnification and interpolation control servers to select the function coefficients of one of said functions for employment by the calculation circuit.

10. An image processing apparatus as claimed in any one of claims 5 to 9, wherein said spline weighting functions are B-spline, local control functions.

11. An image processing apparatus as claimed in any one of claims 5 to 10, wherein said calculation means comprises a finite impulse response filter.

12. An image processing system for processing data representing an image to produce data representing a larger version of the image, in which system initial image data defining a multiplicity of pixel values predetermined positions in an initial image is processed to produce data representing additional pixel values at positions between the predetermined positions, which processing is effected by way of an interpolation function selected to provide a continuous transition between adjacent pixel values in the processed image data.
